(19) Europäisches Patentamt
European Patent Office
Office européen des brevets

(11) **EP 1 926 371 B1**

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(21) Anmeldenummer: **06791754.2**

(22) Anmeldetag: **31.08.2006**

(51) Int Cl.:
*A01N 37/50* (2006.01)　　*A01N 43/653* (2006.01)
*A01N 47/04* (2006.01)　　*A01N 25/14* (2006.01)
*B01J 2/20* (2006.01)

(86) Internationale Anmeldenummer:
**PCT/EP2006/008512**

(87) Internationale Veröffentlichungsnummer:
**WO 2007/028537 (15.03.2007 Gazette 2007/11)**

(54) **FESTSTOFF-FORMULIERUNG FUNGIZIDER MISCHUNGEN**

SOLID FORMULATION OF FUNGICIDAL MIXTURES

FORMULATION DE MELANGES FONGICIDES SOLIDES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.09.2005 DE 102005042879**

(43) Veröffentlichungstag der Anmeldung:
**04.06.2008 Patentblatt 2008/23**

(73) Patentinhaber: **Bayer CropScience AG**
**40789 Monheim (DE)**

(72) Erfinder: **WOLF, Hilmar**
**40764 Langenfeld (DE)**

(56) Entgegenhaltungen:
EP-A1- 0 413 267　　EP-A1- 0 831 698
WO-A-2005/117586　　WO-A1-00/01234
WO-A2-02/24164　　DE-A1- 10 151 392
US-A- 4 936 901

• WINOWISKI, T. ET AL: "Improved efficacy of lignosulfonate dispersants through a novel combination" ASTM SPECIAL TECHNICAL PUBLICATION , STP 1430(PESTICIDE FORMULATIONS AND DELIVERY SYSTEMS), CODEN: ASTTA8; ISSN: 0066-0558, 2003, Seiten 66-74, XP009079278
• HUMPHREY, S. T.: "Agrochemical formulations using natural lignin products" 1998, CHEMISTRY AND TECHNOLOGY OF AGROCHEMICAL FORMULATIONS , 158-178. EDITOR(S): KNOWLES, D. ALAN. PUBLISHER: KLUWER ACADEMIC PUBLISHERS, DORDRECHT, NETH. CODEN: 68RSAX , XP009079275 Seite 163 - Seite 165 Seite 167 Seite 168; Tabelle 6.2
• COLLI, H. T. DELLI ET AL: "The physical chemistry of WDGs: Porosity and surfactant dissolution as a function of dispersant molecular weight" ASTM SPECIAL TECHNICAL PUBLICATION , STP 1400(PESTICIDE FORMULATIONS AND APPLICATION SYSTEMS: TWENTIETH VOLUME), CODEN: ASTTA8; ISSN: 0066-0558, 2001, Seiten 141-151, XP009079277
• Bayer CropScience: "FLINT - Sicherheitsdatenblatt", , 10 December 2002 (2002-12-10), pages 1-7, XP007915899, Retrieved from the Internet: URL:http://www.dehner-agrar.de/fileadmin/s icherheitsdatenblaetter/ Flint_9-III-707.pd f [retrieved on 2010-11-16]

**Beschreibung**

Die Erfindung betrifft Feststoff-Formulierungen (insbesondere Wasser-dispergierbare Granulate) von Mischungen von Trifloxystrobin (TFS) mit Tebuconazol oder Tolylfluanid (Euparen M), ein Verfahren zu deren Herstellung und ihre Verwendung zur Applikation der enthaltenen Wirkstoffe.

EP-A-0831698 offenbart Mischungen von TFS mit Tebuconazol, es werden jedoch nur WG-Formulierungen mit einem Wirkstoffgehalt von 15 Gew.-% gelehrt. Die Herstellung höher konzentrierter Mischungen wird nur in Form von Pulvern oder als Suspensionskonzentrat offenbart.

Die Herstellung von hoch konzentrierten WG-Formulierungen mit den im Stand der Technik genannten Formulierhilfsmitteln führt zu Formulierungen, die unerwünschte Eigenschaften haben. So führt der niedrige Schmelzpunkt der Wirkstoffmischung zur Entstehung großer Mengen von Nasssiebrückständen, die bei der späteren Ausbringung der Spritzbrühe zu Verstopfungen der Spritzdüsen führen. Es wurde nun überraschend gefunden, dass die vorliegenden, hoch konzentrierten Formulierungen besonders vorteilhafte Eigenschaften aufweisen. So entstehen bei ihrer Herstellung nur sehr geringe Mengen an Nasssiebrückständen, sie lassen sich gut extrudieren und besitzen besonders hohe Suspensionsstabilität.

Gegenstand der Erfindung sind deshalb Zusammensetzungen, d.h. fungizide Feststoffformulierungen in Form von Wasser-dispergierbaren Granulaten, enthaltend:

- Trifloxystrobin (Komponente I)

- Mindestens einen weiteren Wirkstoff ausgewählt aus Tebuconazol und Tolylfluanid (Komponente II)

- mindestens ein Dispergiermittel, enthaltend das Kondensationsprodukt von sulfoniertem Ditolylether und Formaldehyd.

In den erfindungsgemäßen Zusammensetzungen liegen die Komponenten I und II in Gewichtsverhältnissen von 1 : 30 bis 12 : 1, bevorzugt 1 : 20 bis 5 : 1, besonders bevorzugt 1 : 15 bis 1 : 1, vor. Enthält die erfindungsgemäße Zusammensetzung Tebuconazol und Tolylfluanid, so gelten sie zusammen als Komponente II.

Die Komponenten I und II gemeinsam werden im folgenden als Wirkstoff bezeichnet.

Eine bevorzugte Ausführungsform der Erfindung sind Zusammensetzungen enthaltend

- 50 - 75 %, bevorzugt 60 - 75 %, besonders bevorzugt 65 - 75 % Wirkstoff
- 5 - 20 %, bevorzugt 10 - 20 %, besonders bevorzugt 10 -15 % des Dispergiermittels Baykanol ® SL.

Prozentzahlen sind - wenn nicht anders angegeben - als Gewichtsprozente zu verstehen.

Eine hervorzuhebende Ausführungsform der Erfindung sind solche Zusammensetzungen, bei denen Baykanol ® SL als Dispergiermittel eingesetzt wird.

Eine weitere hervorzuhebende Ausführungsform der Erfindung sind solche Zusammensetzungen, bei denen Baykanol ® SL als Dispergiermittel und Tebuconazol als Komponente II eingesetzt werden.

Eine weitere hervorzuhebende Ausführungsform der Erfindung sind solche Zusammensetzungen, bei denen Baykanol ® SL als Dispergiermittel und Tolylfluanid als Komponente II eingesetzt werden.

Es wurde außerdem gefunden, dass sich die erfindungsgemäßen Zusammensetzungen herstellen lassen, indem eine pulverförmige Mischung bestehend aus den Wirkstoffen und den Formulierhilfsmitteln befeuchtet, anschließend mittels Niederdruckextrusion granuliert und die feuchten Granulate danach getrocknet werden. Einschlägige Geräte für die Befeuchtung, Extrusion und Trocknung sind dem Fachmann bekannt. Bei der Herstellung ist insbesondere zu beachten, dass die Temperaturen, denen das Produkt ausgesetzt ist, bei allen Prozessschritten kleiner als 60°C gehalten werden und bevorzugt niedriger als 50°C.

Auch dieses Verfahren ist Gegenstand der Erfindung.

Schließlich wurde gefunden, dass sich die erfindungsgemäßen Zusammensetzungen sehr gut zur Applikation der enthaltenen agrochemischen Wirkstoffe auf Pflanzen und/oder deren Lebensraum eignen. Auch dieses Verfahren ist Gegenstand der Erfindung.

Die erfindungsgemäßen Zusammensetzungen enthalten gegebenenfalls weitere Formulierhilfsmittel, z.B. gegebenenfalls Stoffe aus den Gruppen der Emulgiermittel, der anionischen oder nichtionischen Tenside, der schaumhemmenden Mittel, der Konservierungsmittel, der Antioxydantien, der Farbstoffe und/oder der inerten Füllmaterialien.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat. Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist Butylhydroxytoluol.

Als Farbstoffe kommen alle üblicherweise für diesen Zweck in agrochemischen Mitteln einsetzbaren Substanzen in Frage. Beispielhaft genannt seien Titandioxid, Farbrüß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Die Aufwandmenge an den erfindungsgemäßen Formulierungen kann innerhalb eines größeren Bereiches variiert werden. Sie richtet sich nach den jeweiligen Wirkstoffen und nach deren Gehalt in den Zusammensetzungen.

Mit Hilfe der erfindungsgemäßen Zusammensetzungen lassen sich die fungiziden Wirkstoffmischungen in besonders vorteilhafter Weise auf Pflanzen und/oder deren Lebensraum ausbringen.

Mit den erfindungsgemäßen Zusammensetzungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Hervorgehoben sei hierbei die besonders vorteilhafte Wirkung der erfindungsgemäßen Mittel hinsichtlich der Anwendung in Getreidepflanzen, wie z.B. Weizen, Hafer, Gerste, Dinkel, Triticale und Roggen, aber auch in Mais, Hirse, Reis, Zuckerrohr, Soja, Sonnenblumen, Kartoffeln, Baumwolle, Raps, Canola, Tabak, Zuckerrüben Futterrüben, Spargel, Hopfen sowie Obstpflanzen (umfassend Kernobst wie z.B. Äpfel und Birnen, Steinobst wie z.B. Pfirsiche, Nektarinen, Kirschen, Pflaumen und Aprikosen, Zitrusfrüchte wie z.B. Orangen, Grapefruits, Limetten, Zitronen, Kumquats, Mandarinen und Satsumas, Nüsse wie z.B. Pistazien, Mandeln, Walnüsse und Pecannüsse, tropische Früchte wie z.B. Mango, Papaya, Ananas, Datteln und Bananen, und Weintrauben) und Gemüse (umfassend Blattgemüse, wie z.B. Endivien, Feldsalat, Knollenfenchel, Kopf- und Pflücksalate, Mangold, Spinat und Zichoriensalat, Kohlgemüse wie z.B. Blumenkohl, Brokkoli, Chinakohl, Grünkohl (Winter- oder Krauskohl), Kohlrabi, Rosenkohl, Rotkohl, Weißkohl und Wirsing, Fruchtgemüse wie z.B. Auberginen, Gurken, Paprika, Speisekürbisse, Tomaten, Zucchini und Zuckermais, Wurzelgemüse wie z.B. Knollensellerie, Mairüben, Möhren, Gelbe Rüben, Radieschen, Rettich, Rote Rüben, Schwarzwurzeln und Stangensellerie, Hülsenfrüchte wie z.B. Erbsen und Bohnen sowie Zwiebelgemüse wie z.B. Lauch und Speisezwiebeln).

Die erfindungsgemäße Behandlung der Pflanzen und Pflanzenteile mit den erfindungsgemäßen Zusammensetzungen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Zusammensetzungen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft, aber nicht begrenzend, seien einige Erreger von pilzlichen Erkrankungen, die unter die oben aufgezählten Oberbegriffe fallen, genannt:

Erkrankungen, hervorgerufen durch Erreger des Echten Mehltaus wie z.B.

Blumeria-Arten, wie beispielsweise Blumeria graminis;

Podosphaera-Arten, wie beispielsweise Podosphaera leucotricha;

Sphaerotheca-Arten, wie beispielsweise Sphaerotheca fuliginea;

Uncinula-Arten, wie beispielsweise Uncinula necator;

Erkrankungen, hervorgerufen durch Erreger von Rostkrankheiten wie z.B.

Gymnosporangium-Arten, wie beispielsweise Gymnosporangium sabinae

Hemileia-Arten, wie beispielsweise Hemileia vastatrix;

Phakopsora-Arten, wie beispielsweise Phakopsora pachyrhizi und Phakopsora meibomiae;

Puccinia-Arten, wie beispielsweise Puccinia recondita oder Puccinia triticina;

Uromyces-Arten, wie beispielsweise Uromyces appendiculatus;

Erkrankungen, hervorgerufen durch Erreger der Gruppe der Oomyceten wie z.B.

Bremia-Arten, wie beispielsweise Bremia lactucae;

Peronospora-Arten, wie beispielsweise Peronospora pisi oder P. brassicae;

Phytophthora-Arten, wie beispielsweise Phytophthora infestans;

Plasmopara-Arten, wie beispielsweise Plasmopara viticola;

Pseudoperonospora-Arten, wie beispielsweise Pseudoperonospora humuli oder Pseudoperonospora cubensis;

Pythium-Arten, wie beispielsweise Pythium ultimum;

Blattfleckenkrankheiten und Blattwelken, hervorgerufen durch z.B.

Alternaria-Arten, wie beispielsweise Alternaria solani;

Cercospora-Arten, wie beispielsweise Cercospora beticola;

Cladiosporum-Arten, wie beispielsweise Cladiosporium cucumerinum;

Cochliobolus-Arten, wie beispielsweise Cochliobolus sativus

(Konidienform: Drechslera, Syn: Helminthosporium);

Colletotrichum-Arten, wie beispielsweise Colletotrichum lindemuthanium;

Cycloconium-Arten, wie beispielsweise Cycloconium oleaginum;

Diaporthe-Arten, wie beispielsweise Diaporthe citri;

Elsinoe-Arten, wie beispielsweise Elsinoe fawcettii;

Gloeosporium-Arten, wie beispielsweise Gloeosporium laeticolor;

Glomerella-Arten, wie beispielsweise Glomerella cingulata;

Guignardia-Arten, wie beispielsweise Guignardia bidwelli;

Leptosphaeria-Arten, wie beispielsweise Leptosphaeria maculans;

Magnaporthe-Arten, wie beispielsweise Magnaporthe grisea;

Mycosphaerella-Arten, wie beispielsweise Mycosphaerella graminicola;

Phaeosphaeria-Arten, wie beispielsweise Phaeosphaeria nodorum;

Pyrenophora-Arten, wie beispielsweise Pyrenophora teres;

Ramularia-Arten, wie beispielsweise Ramularia collo-cygni;

Rhynchosporium-Arten, wie beispielsweise Rhynchosporium secalis;

Septoria-Arten, wie beispielsweise Septoria apii;

Typhula-Arten, wie beispielsweise Typhula incarnata;

Venturia-Arten, wie beispielsweise Venturia inaequalis;

Wurzel- und Stengelkrankheiten, hervorgerufen durch z.B.

Corticium-Arten, wie beispielsweise Corticium graminearum;

Fusarium-Arten, wie beispielsweise Fusarium oxysporum;

Gaeumannomyces-Arten, wie beispielsweise Gaeumannomyces graminis;

Rhizoctonia-Arten, wie beispielsweise Rhizoctonia solani;

Tapesia-Arten, wie beispielsweise Tapesia acuformis;

Thielaviopsis-Arten, wie beispielsweise Thielaviopsis basicola;

Ähren- und Rispenerkrankungen (inklusive Maiskolben), hervorgerufen durch z.B.

Alternaria-Arten, wie beispielsweise Alternaria spp.;

Aspergillus-Arten, wie beispielsweise Aspergillus flavus;

Cladosporium-Arten, wie beispielsweise Cladosporium spp.;

Claviceps-Arten, wie beispielsweise Claviceps purpurea;

Fusarium-Arten, wie beispielsweise Fusarium culmorum;

Gibberella-Arten, wie beispielsweise Gibberella zeae;

Monographella-Arten, wie beispielsweise Monographella nivalis;

Erkrankungen, hervorgerufen durch Brandpilze wie z.B.

Sphacelotheca-Arten, wie beispielsweise Sphacelotheca reiliana;

Tilletia-Arten, wie beispielsweise Tilletia caries;

Urocystis-Arten, wie beispielsweise Urocystis occulta;

Ustilago-Arten, wie beispielsweise Ustilago nuda;

Fruchtfäule hervorgerufen durch z.B.

Aspergillus-Arten, wie beispielsweise Aspergillus flavus;

Botrytis-Arten, wie beispielsweise Botrytis cinerea;

Penicillium-Arten, wie beispielsweise Penicillium expansum;

Sclerotinia-Arten, wie beispielsweise Sclerotinia sclerotiorum;

Verticilium-Arten, wie beispielsweise Verticilium alboatrum;

Samen- und bodenbürtige Fäulen und Welken, sowie Sämlingserkrankungen, hervorgerufen durch z.B.

Fusarium-Arten, wie beispielsweise Fusarium culmorum;

Phytophthora Arten, wie beispielsweise Phytophthora cactorum;

Pythium-Arten, wie beispielsweise Pythium ultimum;

Rhizoctonia-Arten, wie beispielsweise Rhizoctonia solani;

Sclerotium-Arten, wie beispielsweise Sclerotium rolfsii;

Krebserkrankungen, Gallen und Hexenbesen, hervorgerufen durch z.B.

Nectria-Arten, wie beispielsweise Nectria galligena;

Welkeerkrankungen hervorgerufen durch z.B.

Monilinia-Arten, wie beispielsweise Monilinia laxa;

Deformationen von Blättern, Blüten und Früchten, hervorgerufen durch z.B.

Taphrina-Arten, wie beispielsweise Taphrina deformans;

Degenerationserkrankungen holziger Pflanzen, hervorgerufen durch z.B.

Esca-Arten, wie beispielsweise Phaemoniella clamydospora;

Blüten- und Samenerkrankungen, hervorgerufen durch z.B.

Botrytis-Arten, wie beispielsweise Botrytis cinerea;

Erkrankungen von Pflanzenknollen, hervorgerufen durch z.B.

Rhizoctonia-Arten, wie beispielsweise Rhizoctonia solani;

Erkrankungen, hervorgerufen durch bakterielle Erreger wie z.B.

Xanthomonas-Arten, wie beispielsweise Xanthomonas campestris pv. oryzae;

Pseudomonas-Arten, wie beispielsweise Pseudomonas syringae pv. lachrymans;

Erwinia-Arten, wie beispielsweise Erwinia amylovora;

Bevorzugt können die folgenden Krankheiten von Soja-Bohnen bekämpft werden: Pilzkrankheiten an Blättern, Stängeln, Schoten und Samen verursacht durch z.B.

Alternaria leaf spot (Alternaria spec. antrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochacta glyoines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola)

Pilzkrankheiten an Wurzeln und der Stängelbasis verursacht durch z.B.

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoetonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

## Beispiele

In einer Versuchsreihe wurden Proben der folgenden allgemeinen Zusammensetzung

| 25 Gew.-% | Trifloxystrobin |
|---|---|
| 50 Gew.-% | Tebuconazol |

(fortgesetzt)

| 15 Gew.-% | Dispergiermittel |
| 10 Gew.-% | Kaolin |

auf einem Laborextruder vom Typ Fuji Paudal DG-1 extrudiert und danach vergleichend geprüft.

**Herstellung:**

Im ersten Schritt der Herstellung wird eine pulverförmige Mischung obiger Zusammensetzung durch Vermischung der Ausgangskomponenten und anschliessender Luftstrahlmahlung auf einer 8 Zoll Luftstrahlmühle zubereitet. Danach wird das Pulver durch portionsweise Zugabe von Wasser und intensiver Vermischung in einem Braun-Küchenmixer homogen befeuchtet. In Vorversuchen wurde für jede Pulvermischung die Wassermenge bestimmt bei deren Zugabe die jeweils beste Extrusion möglich war. In Abhängigkeit vom verwendeten Dispergiermittel betrug die zugesetzte Wassermenge zwischen 13 und 24 Gew.-% bezogen auf die Menge des Pulvers. Das befeuchtete Pulver wird anschliessend mittels des Laborextruders extrudiert und die feuchten Granulate in einem Wirbelbetttrockner bei 60°C Zuluft und ca. 35°C Abluft getrocknet wobei die Produkttemperatur maximal 40°C beträgt. Die Trocknungszeit variiert zwischen 2 und 12 Minuten. Der Rest-Wassergehalt der Proben liegt zwischen 0,3 und 1,7 % und wird mittels Gewichtsverlust mit einer Thermoanalysenwaage vom Typ Mettler LP 16 bei 70°C bestimmt.

**Prüfung:**

Nasssiebung: Geprüft wurden die Rückstände auf einem Sieb der Maschenweite von 150 $\mu$m. Die Rückstände bei der Nasssiebung sind bei der Herstellung von WG-Formulierungen durch Extrusion niedrig schmelzender Wirkstoffe von besonderer Bedeutung, da beim Extrusionsprozess durch Verdichtung und Temperaturbelastung Produktanteile entstehen können, die bei der bestimmungsgemäßen Anwendung in Wasser nicht in die Primärteilchen redispergieren und zu Verstopfung der Filter in praxisüblichen landwirtschaftlichen Geräten führen. Als Folge davon kann die Unterbrechung der Ausspritzung und die aufwändige Reinigung der Filter nötig werden. Der Nassiebetest ist ein Labortest, der zur Beurteilung der nicht dispergierenden Anteile in der Formulierung dient. Bevorzugt sollte der Siebrückstand in diesem Test kleiner als 0,05% und besonders bevorzugt kleiner als 0,02% sein.

In ein 2 l Becherglas mit Rührer gibt man 1000 ml Leitungswasser und trägt unter Rühren mit 500 Umdrehungen pro Minute 50 g der WG-Formulierung ein. Man rührt 150 Sekunden und gibt die Suspension auf ein Sieb mit der Maschenweite 150 $\mu$m, spült die Reste im Becherglas mit etwas Leitungswasser nach und wäscht mit einem Wasserstrahl (Gummischlauch mit Innendurchmesser ca. 10 mm; Leitungswasserdurchsatz ca. 4-5 l/min). Dabei wird das Feingut durch das Sieb gespült. Nach einigen (maximal zehn) Minute Spülzeit lässt man das Sieb abtropfen und überführt den Rückstand aus dem Sieb mit entmineralisiertem Wasser in eine zuvor gewogene Abdampfschale und trocknet bei 70°C bis zur Gewichtskonstanz. Nach dem Abkühlen wird ausgewogen und der prozentuale Anteil des Rückstands bezogen auf die eingesetzten 50 g Formulierung bestimmt.

Beurteilung der Extrudierbarkeit: Die Beurteilung der Extrudierbarkeit einer Mischung beruht auf den Beobachtungen bei der Musterherstellung. In die Bewertung gehen z.B. Fliessfähigkeit des angefeuchteten Pulvers, Strangbildung, Strangzerfall, Erwärmung etc. ein. Für ein erfolgversprechendes scale up muss die Beurteilung "gut" oder mindestens "befriedigend" sein. "Mäßig" bedeutet, dass die Granulation nur unzureichend erfolgt und "schlecht" bedeutet, dass die Mischung auf dem Laborextruder nicht extrudierbar ist.

Suspensionsstabilität: Die Suspensionsstabilität ist ein Maß für das Schwebevermögen der unlöslichen Bestandteile der Formulierung in der Spritzbrühe. Eine gute Suspensionsstabilität gewährleistet die homogene Verteilung des Produkts und damit die gleichmäßige Dosierung bei der Ausbringung. Die Suspensionsstabilität sollte im allgemeinen >/= 75% betragen. In einem 250 ml Messzylinder wird eine 1%-ige Suspension der Formulierung hergestellt indem die berechnete Menge des Granulats in Wasser gegeben, 4 Minuten stehen gelassen und nach Verschließen des Messzylinders mit einem Gummistopfen innerhalb 1 Minute 30 mal um 180° gedreht wird. Man entfernt den Gummistopfen und lässt die Suspension bei Umgebungstemperatur genau 30 Minuten ruhig stehen. Dann werden die oberen 9/10 der Suspension durch Absaugen entfernt und das untere Zehntel wird mit destilliertem Wasser in eine gewogene Abdampfschale überführt. Der Schaleuinhalt wird bis zur Gewichtskonstanz bei 70°C getrocknet und so der Bodensatz ermittelt. Der Anteil der Suspension (Suspensionsstabilität) ergibt sich durch die Formel:

$$\text{Anteil der Suspension} = (100 - \text{Bodensatz}) \times 1{,}11$$

Prozentzahlen sind in den folgenden Tabellen - wenn nicht anders angegeben - als Gewichtsprozente zu verstehen.

**Tabelle 1:**

| Beispiel Nr. | Dispergiermittel | Wasserzusatz (%) | Beurteilung Extrudierbarkeit | Nasssiebung Rückstand auf 150 $\mu$m-Sieb (%) |
|---|---|---|---|---|
| 1 | Baykanol ® SL | 19 | gut | 0,010 |
| 2* | Borresperse ® NA | 21 | gut | 0,565 |
| 3* | Tersperse ® 2425 | 18 | gut | 0,365 |
| 4* | Galoryl ® DT 530 | 14 | mäßig | 0,239 |
| 5* | Kraftsperse ® DD-5 | 19 | gut-befriedigend | 0,072 |
| 6* | Kraftsperse ® DD-8 | 18 | mäßig | 0,069 |
| 7* | Kraftsperse ® DW-S | 13 | befriedigend-mäßig | 0,975 |
| 8* | Kraftsperse ® EDF-450 | 20 | mäßig | 0,165 |
| 9* | Morwet ® D 425 | 13 | mäßig | 0,741 |
| 10* | Reax ® 88 B | 21 | befriedigend | 0,040 |
| 11* | Reax ® 907 | 22 | gut | 0,033 |
| 12* | Ufoxane ® 3 A | 17 | gut-befriedigend | 0,291 |
| * nicht erfindungsgemäß | | | | |

Die Ergebnisse einer Reihe von Versuchen mit verschiedenen Dispergiermitteln sind in Tabelle 1 zusammengefasst. Die Proben differieren stark hinsichtlich der Rückstände bei der Nasssiebung und der Beurteilung der Extrudierbarkeit. Nur die Beispiele 1, 10 und 11 erfüllen die Anforderung von bevorzugt weniger als 0,05 % Nasssiebrückständen. Nur die Beispiele 1 und 11 weisen außerdem zugleich eine "gute" Extrudierbarkeit auf. Nur Beispiel 1 weist die besonders bevorzugten Nasssiebrückstände von weniger als 0,02 % bei gleichzeitig "guter" Extrudierbarkeit auf

**Tabelle 2:**

| Beispiel Nr. | 13* | 14* | 15* | 16* | 17* | 18 | 19 | 20 |
|---|---|---|---|---|---|---|---|---|
| Rezeptur | | | | | | | | |
| Trifloxystrobin [%] | 6 | 6,3 | 6,3 | 6,3 | 6,3 | 6,3 | 6,3 | 6,3 |
| Tolylfluanid [%] | 65 | 62,5 | 62,5 | 62,5 | 62,5 | 62,5 | 62,5 | 62,5 |
| Kraftsperse ® EDF-350 [%] | 15 | 15 | 15 | 15 | | | | |
| Kraftsperse ® EDF-450 [%] | | | | | | | | |
| Reax ® 907 [%] | | | | | 15 | | | |
| Baykanol ® SL [%] | | | | | | 15 | 15 | 10 |
| Geropon ® TA/72 [%] | 5 | 5 | 5 | | | | | |
| Galoryl ® MT 804 [%] | | | | 1 | 1 | 1 | 1 | 1 |
| Pergopak ® M [%] | 5 | | | 3 | 3 | | | 2 |
| Rthodorsil ® EP 6703 [%] | | 1 | 1 | 1 | 1 | | | |
| MgO[%] | | | | | | | | 1 |
| Celite ® 209 S [%] | 4 | 10,2 | | | | | | |
| Kaolin W [%] | | | 10,2 | 11,2 | 11,2 | 15,2 | | 17,2 |
| Talkum Luzenac 2 [%] | | | | | | | 15,2 | |

(fortgesetzt)

| Beispiel Nr. | 13* | 14* | 15* | 16* | 17* | 18 | 19 | 20 |
|---|---|---|---|---|---|---|---|---|
| **Rezeptur** | | | | | | | | |
| Summe | 100 | 100 | 100 | 100 | 100 | 100 | 100 | 100 |
| Wasserzusatz während Herstellung [%] | **30** | **25** | **25** | **20** | **20** | **15** | **12** | **25** |
| *** nicht erfindungsgemäß** | | | | | | | | |

**Tabelle 3:**

| Beispiel Nr. | 13* | 14* | 15* | 16* | 17* | 18 | 19 | 20 |
|---|---|---|---|---|---|---|---|---|
| **Herstellung** | | | | | | | | |
| Suspensionsstabilität [%] | 89 | 89 | 90 | 87 | 89 | 93 | 95 | 90 |
| Nassiebung 150 $\mu$m [%] | | | | | | 0.020 | 0.010 | |
| **2W / 54 °C** | | | | | | | | |
| Suspensionsstabilität [%] | 53 | 27 | 38 | 34 | 87 | 91 | 88 | 72 |
| Nassiebung 150 $\mu$m [%] | 0.030 | 21.5 | 0 | 0.13 | 0.12 | 0.005 | 0.005 | 0 |
| **4W / 40 °C** | | | | | | | | |
| Suspensionsstabilität [%] | 24.2 | 75 | 67 | 67 | 92 | 93 | 94 | 84 |
| Nassiebung 150 $\mu$m [%] | 0 | 0 | 0 | 0.016 | 0 | 0 | 0 | 0.023 |
| * nicht erfindungsgemäß | | | | | | | | |

In Tabelle 2 sind verschiedene Formulierungen von Trifloxystrobin in Mischung mit Tolylfluanid zusammengefasst. Die Herstellung erfolgte wie weiter oben beschrieben auf einem Laborextruder vom Typ Fuji Paudal DG-1. Im Tabelle 3 sind die Prüfergebnisse der Beispielformulierungen hinsichtlich Suspensionsstabilität und Nassieberückstänen aufgefürt. Die Durchführung der Prüfungen erfolgte mit den weiter oben beschriebenen Methoden. "Herstellung" bedeutet, dass die Prüfung in kurzem Zeitabstand zur Herstellung (in der Regel nach maximal fünf Tagen und Aufbewahrung bei Umgebungstemperatur) des Musters durchgeführt wurde, während "2W/54°C" und "4W/40°C" bedeutet, dass die Proben 2 Wochen bei 54°C bzw. 4 Wochen bei 40°C gelagert und danach geprüft wurden. Die Prüfergebnisse nach Lagerung über einen relativ kurzen Zeitraum bei höheren Temperaturen erlauben eine Abschätzung der Stabilität der Formulierung nach Lagerung bei üblicher Umgebungstemperatur über einen längeren Zeitraum.

Bei Zusammensetzungen enthaltend eine Kombination aus Trifloxystrobin und Tolylfluanid ist neben den Siebrückständen bei der Nasssiebung die Suspensionsstabilität problematisch. Die Ergebnisse zeigen, dass lediglich die Proben, die unter Verwendung der Dispergiermittel Baykanol® SL und Reax 907 hergestellt wurden (Beispiele 17 - 20), zufriedenstellende Suspensionsstabilität und Nassieberückstände haben, vor allem nach Lagerung bei erhöhten Temperaturen. Besonders zu bevorzugen ist Baykanol® SL.

Kraftspene ® EDF-350 ist ein Ligninsulfonat der Firma Westvaco Corp., Charleston Heights, SC, USA.

Geropon ® TA 72 ist ein Polycarbonsäure-Natrium-salz der Firma Rhodia, Boulogne, Frankreich.

Galoryl ® MT 804 ist ein Di-butyl-naphthalin-sulfonsäure-Natrium-salz der Firma Nufarm, Melbourne, Australien.

Pergopak ® M ist ein Polymethylharnstoffharz der Albemarle Corporation, Baton Rouge, LA, USA.

Rhodorsil ® EP 6703 ist ein Polydimethylsiloxan auf Stärke der Firma Rhodia, Boulogne, Frankreich.

Celite ® 209 S ist eine Diatomenerde der Firma Lehmann & Voss, Hamburg, Deutschland.

Talkum Luzenac 2 ist ein Magnesiumhydrosilikat der Firma Luzenac Europe, Paris, Frankreich.

Kaolin W ist ein Aluminiumhydrosilikat der Firma Erbslöh Lohrheim GmbH & Co. KG, Lohrheim, Deutschland.

Kraftsperse ® DD-5, Kraftsperse ® DD-8, Kraftsperse ® DW-8, Kraftsperse ® EDF-450, Reax ® 88B und Reax ® 907 sind Ligninsulfonate der Firma Westvaco Corp., Charleston Heights, SC, USA.

Borresperse ® Na und Ufoxane ® 3 A sind Ligninsulfonate der Firma Borregaard, Sarpsborg, Norwegen.

Morwet ® D 425 ist ein Naphthalinsulfonsäure-Formaldehyd-Kondensat, Natriumsalz der Firma Akzo Nobel, Stenungsund, Schweden.

Galoryl ® DT 530 ist ein Naphthalinsulfonsäure-Formaldehyd-Kondensat,-Natriumsalz der Firma Nufarm, Melbourne, Australien.

Tersperse ® ist ein Naphthalinsulfonsäure-Formaldehyd-Kondensat, Natriumsalz der Firma Huntsman, The Woodlands, Texas, USA.

Baykanol ® SL ist ein Alkyl-Aryl-Sulfonat der Firma Lanxess, Leverkusen, Deutschland.

**Patentansprüche**

1. Fungizide Feststoff-Formulierungen in Form von Wasser-dispergierbaren Granulaten enthaltend

    - Trifloxystrobin
    - mindestens einen weiteren Wirkstoff ausgewählt aus Tebuconazol und Tolylfluanid,
    - mindestens ein Dispergiermittel enthaltend das Kondensationsprodukt von sulfoniertem Ditolylether und Formaldehyd.

2. Fungizide Feststoff-Formulierungen gemäß Anspruch 1, **dadurch gekennzeichnet, dass** sie weiterhin mindestens ein Netzmittel sowie inertes Füllmaterial enthalten.

3. Fungizide Feststoff-Formulierungen gemäß einem oder mehreren der Ansprüche 1 bis 2, **dadurch gekennzeichnet, dass** sie weitere Formulierhilfsmittel aus den Gruppen der Emulgiermittel, Tenside, der schaumhemmenden Mittel, der Konservierungsmittel, der Antioxydantien, der Farbstoffe und/oder der inerten Füllmaterialien enthalten.

4. Fungizide Feststoff-Formulierungen gemäß einem oder mehreren der Ansprüche 1 bis 3, **dadurch gekennzeichnet, dass** sie mindestens einen weiteren fungiziden Wirkstoff enthalten.

5. Verfahren zur Herstellung einer fungiziden Feststoff-Formulierung in Form von Wasser-dispergierbaren Granulaten gemäß Anspruch 1, **dadurch gekennzeichnet, dass** die Formulierung durch Niederdruckextrusion bei Temperaturen unter 60°C hergestellt wird.

6. Verwendung einer fungiziden Feststoff-Formulierung gemäß einem oder mehreren der Ansprüche 1 bis 4 zur Applikation der enthaltenen agrochemischen Wirkstoffe auf Pflanzen und/oder deren Lebensraum.

7. Mittel, **gekennzeichnet durch** einen Gehalt an einer fungiziden Feststoff-Formulierung gemäß einem oder mehreren der Ansprüche 1 bis 4 und Streckmitteln und/oder oberflächenaktiven Agenzien.

8. Verwendung einer fungiziden Feststoff-Formulierung gemäß einem oder mehreren der Ansprüche 1 bis 4 zur Bekämpfung von Pilzen.

**Claims**

1. Fungicidal solids formulations in the form of water-dispersible granules containing

    - trifloxystrobin
    - at least one further active substance selected from tebuconazole and tolylfluanid,
    - at least one dispersant containing the condensation product of sulphonated ditolyl ether and formaldehyde.

2. Fungicidal solids formulations according to Claim 1, **characterized in that** they furthermore contain at least one wetter and inert filler.

3. Fungicidal solids formulations according to one or more of Claims 1 to 2, **characterized in that** they contain further formulation auxiliaries from the groups of the emulsifiers, surfactants, the antifoam agents, the preservatives, the antioxidants, the colorants and/or the inert fillers.

4. Fungicidal solids formulations according to one or more of Claims 1 to 3, **characterized in that** they contain at least one further fungicidal active substance.

5. Process for the preparation of a fungicidal solids formulation in the form of water-dispersible granules according to Claim 1, **characterized in that** the formulation is prepared by low-pressure extrusion at temperatures below 60°C.

**6.** Use of a fungicidal solids formulation according to one or more of Claims 1 to 4 for the application of the agrochemical active substances present on plants and/or their environment.

**7.** Composition, **characterized in that** it contains a fungicidal solids formulation according to one or more of Claims 1 to 4 and extenders and/or surface-active agents.

**8.** Use of a fungicidal solids formulation according to one or more of Claims 1 to 4 for controlling fungi.


**Revendications**

**1.** Formulations solides fongicides sous forme de granulés dispersibles dans l'eau, contenant

   - de la trifloxystrobine
   - au moins une autre substance active choisie parmi le tébuconazole et le tolylfluanide,
   - au moins un dispersant contenant le produit de condensation de ditoluyléther sulfoné et de formaldéhyde.

**2.** Formulations solides fongicides selon la revendication 1, **caractérisées en ce qu'**elles contiennent en outre au moins un agent mouillant ainsi que des charges inertes.

**3.** Formulations solides fongicides selon l'une ou plusieurs des revendications 1 à 2, **caractérisées en ce qu'**elles contiennent d'autres adjuvants de formulation des groupes des émulsifiants, des tensioactifs, des antimousses, des conservateurs, des antioxydants, des colorants et/ou des charges inertes.

**4.** Formulations solides fongicides selon l'une ou plusieurs des revendications 1 à 3, **caractérisées en ce qu'**elles contiennent au moins une autre substance active fongicide.

**5.** Procédé pour la préparation d'une formulation solide fongicide sous forme de granulés dispersibles dans l'eau selon la revendication 1, **caractérisé en ce que** la formulation est préparée par extrusion à basse pression à des températures inférieures à 60°C.

**6.** Utilisation d'une formulation solide fongicide selon l'une ou plusieurs des revendications 1 à 4 pour l'application des substances actives agrochimiques contenues sur des plantes et/ou leur espace de vie.

**7.** Agent, **caractérisé par** une teneur en formulation solide fongicide selon l'une ou plusieurs des revendications 1 à 4 et des diluants et/ou des agents tensioactifs.

**8.** Utilisation d'une formulation solide fongicide selon l'une ou plusieurs des revendications 1 à 4 pour lutter contre les champignons.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0831698 A